# EUROPEAN PATENT APPLICATION

(11) **EP 4 354 710 A1**
(43) Date of publication of application: **17.04.2024**
(21) Application number: 23202807.6
(22) Date of filing: 10.10.2023
(51) Int. Cl.: H02K 1/2798, H02K 15/03

(54) **ROTOR DISK AND MANUFACTURING METHOD THEREOF, ROTOR STRUCTURE, DISK MOTOR, AND ELECTRIC VEHICLE**

(30) Priority: 12.10.2022 CN 202211251069
(71) Applicant: Huawei Digital Power Technologies Co., Ltd., Shenzhen, Guangdong 518043 (CN)
(72) Inventor: HOU, Jining, Shenzhen 518043 (CN); SHI, Chaojie, Shenzhen 518043 (CN); LAN, Hua, Shenzhen 518043 (CN)
(74) Representative: Gill Jennings & Every LLP

(57) **Abstract**

This application provides a rotor disk and a manufacturing method thereof, a rotor structure, a disk motor, and an electric vehicle. The rotor disk includes a rotor iron core. The rotor iron core is provided with a plurality of groups of accommodating cavities at intervals in a circumferential direction of the rotor iron core. Each group of accommodating cavities includes a first accommodating cavity and a second accommodating cavity. The first accommodating cavity and the second accommodating cavity are provided in a radial direction of the rotor iron core and are in communication with each other. The first accommodating cavity and the second accommodating cavity are configured to respectively accommodate a first unit portion and a second unit portion of a first magnet. In the circumferential direction of the rotor iron core, the first accommodating cavity includes two first inner surfaces opposite to each other, and the second accommodating cavity includes two second inner surfaces opposite to each other. In an axial direction of the rotor iron core, a connection line of projections of the two first inner surfaces on the rotor iron core can form a first rectangular surface, a connection line of projections of the two second inner surfaces on the rotor iron core can form a second rectangular surface, and a distance between the two second inner surfaces is less than a distance between the two first inner surfaces. The rotor disk can ensure precision of the formed accommodating cavities, and can also implement mass production.

## Description

### TECHNICAL FIELD

This application relates to the field of motor technologies, and in particular, to a rotor disk and a manufacturing method thereof, a rotor structure, a disk motor, and an electric vehicle.

### BACKGROUND

In order to satisfy some requirements of electric vehicles, more and more built-in rotor structures are provided. To ensure that a pole-arc coefficient of a magnetic steel is consistent from an inner diameter to an outer diameter, and to increase an area of the magnetic steel and an air gap surface, a permanent magnet is usually provided in a sector shape to make full use of space of a rotor iron core. When a sector-shaped slot needs to be provided on a rotor iron core formed by winding a silicon steel sheet, it is difficult to directly stamp and slot the wound rotor iron core due to its large thickness in a radial direction, and the stamped rotor iron core also needs to be trimmed and ground, which is not likely to ensure precision of the sector-shaped slot.

Another method is to stamp each layer of silicon steel sheet by a punch head in a process of manufacturing a rotor iron core. However, this method requires frequent replacement of the punch head on a punching and winding device. For example, an area of a slot provided on the outermost layer of silicon steel sheet is the largest, and by analogy, areas of slots provided on other layers of silicon steel sheets need to be reduced in descending order, to finally form a sector-shaped slot. This method can be performed by machining only in the case of replacing a large quantity of punch heads, and cannot implement mass production of the rotor iron core.

If accommodating slots of a same cross-sectional size are directly provided on a rotor iron core, a quantity of magnets embedded in the rotor iron core is reduced, and consequently magnetic field strength of a rotor disk is reduced.

### SUMMARY

This application provides a rotor disk and a manufacturing method thereof, a rotor structure, a disk motor, and an electric vehicle, which can ensure precision of an accommodating slot in a rotor iron core, implement mass production, and further increase a quantity of magnets embedded in the rotor iron core.

According to a first aspect of embodiments of this application, a rotor disk is provided, including a rotor iron core. The rotor iron core has a circular cross section and is formed by winding a sheet structure. The rotor iron core is provided with a plurality of groups of accommodating cavities at intervals in a circumferential direction of the rotor iron core. Each of the plurality of groups of accommodating cavities is configured to accommodate a first magnet. Each group of accommodating cavities includes a first accommodating cavity and a second accommodating cavity. The first accommodating cavity and the second accommodating cavity are provided in a radial direction of the rotor iron core and are in communication with each other. The first accommodating cavity is configured to accommodate a first unit portion of the first magnet. The first accommodating cavity includes two first inner surfaces opposite to each other in the circumferential direction of the rotor iron core. A connection line of projections of the two first inner surfaces on the rotor iron core in an axial direction of the rotor iron core can form a first rectangular surface. The second accommodating cavity is configured to accommodate a second unit portion of the first magnet. The second accommodating cavity includes two second inner surfaces opposite to each other in the circumferential direction of the rotor iron core. A connection line of projections of the two second inner surfaces on the rotor iron core in the axial direction of the rotor iron core can form a second rectangular surface. A distance between the second inner surfaces in the axial direction of the rotor iron core is less than a distance between the two first inner surfaces in the axial direction of the rotor iron core.

In the rotor disk, the connection line of the projections of the first inner surfaces on the rotor iron core can form the first rectangular surface, and the connection line of the projections of the second inner surfaces on the rotor iron core can form the second rectangular surface, so that it can be determined that the first inner surface and the second inner surface of the first accommodating cavity and the second accommodating cavity are parallel in the radial direction of the rotor iron core. The rotor iron core is formed by winding the sheet structure. When the first accommodating cavity and the second accommodating cavity are formed, compared with a sector-shaped slot, the first inner surface and the second inner surface that are parallel to each other are more easily formed, and precision of the first accommodating cavity and the second accommodating cavity is more easily ensured. In addition, a quantity of used punch heads is reduced, thereby reducing costs and implementing mass production.

Based on the first aspect, in a possible implementation, the first accommodating cavity runs through an outer surface of the rotor iron core, the second accommodating cavity runs through an inner surface of the rotor iron core, and the first accommodating cavity is provided at a side that is of the second accommodating cavity and that is away from a circle center.

In this possible implementation, the first accommodating cavity and the second accommodating cavity are sequentially provided in a direction toward the circle center, and the distance between the two first inner surfaces is greater than the distance between the two second inner surfaces, so that the first accommodating cavity and the second accommodating cavity are in a "convex" shape. By using this shape, a quantity of required punch heads can be reduced, which more facilitates formation of the first accommodating cavity and the second accommodating cavity.

Based on the first aspect, in a possible implementation, the rotor iron core is further provided with a third accommodating cavity. The third accommodating cavity is provided at a side of the first accommodating cavity in the circumferential direction of the rotor iron core and is in communication with the first accommodating cavity, and the first unit portion can expose from the third accommodating cavity.

In this possible implementation, the third accommodating cavity in communication with the first accommodating cavity is provided at a side of the first accommodating cavity, so that an overall weight of the rotor iron core can be reduced. In addition, when the first unit portion is disposed in the first accommodating cavity, the third accommodating cavity is an empty cavity. In this case, magnetic induction lines that do not pass through an air gap can be reduced in the third accommodating cavity, thereby reducing magnetic leakage.

Based on the first aspect, in a possible implementation, the rotor iron core is further provided with a plurality of fourth accommodating cavities, and the plurality of fourth accommodating cavities are provided at intervals in the circumferential direction of the rotor iron core. Each fourth accommodating cavity runs through the inner surface of the rotor iron core from the outer surface in the radial direction of the rotor iron core, and is provided at an interval with the first accommodating cavity in the axial direction of the rotor iron core. In the circumferential direction of the rotor iron core, the fourth accommodating cavity includes two fourth inner surfaces opposite to each other. In the axial direction of the rotor iron core, a connection line of projections of the two fourth inner surfaces on the rotor iron core can form a fourth rectangular surface.

In this possible implementation, the connection line of the projections of the two fourth inner surfaces on the rotor iron core forms the fourth rectangular surface, so that it can be determined that the two fourth inner surfaces are parallel to each other. Compared with a sector-shaped slot, the fourth accommodating cavity is more easily formed.

Based on the first aspect, in a possible implementation, the rotor iron core is further provided with a fifth accommodating cavity. The fifth accommodating cavity is provided at a side of the fourth accommodating cavity in the circumferential direction of the rotor iron core and is in communication with the fourth accommodating cavity.

In this possible implementation, the fifth accommodating cavity in communication with the fourth accommodating cavity is provided at a side of the fourth accommodating cavity, so that an overall weight of the rotor iron core can be further reduced. In addition, when a magnet is disposed in the fourth accommodating cavity, the fifth accommodating cavity is an empty cavity. In this case, magnetic induction lines that do not pass through an air gap can be reduced in the fifth accommodating cavity, thereby reducing magnetic leakage.

According to a second aspect of embodiments of this application, a manufacturing method of a rotor disk is provided, including the following steps:

A silicon steel sheet is stamped by a punching and winding device with a first punch head, to form a plurality of first rectangular through holes on the silicon steel sheet.

The silicon steel sheet is stamped by the punching and winding device with a second punch head, to form a plurality of second rectangular through holes on the silicon steel sheet.

The silicon steel sheet is wound to form a rotor iron core, where a plurality of first rectangular through holes form a first accommodating cavity, and a plurality of second rectangular through holes form a second accommodating cavity.

A first magnet is embedded in the first accommodating cavity and the second accommodating cavity from an outside of the rotor iron core in a radial direction.

In the manufacturing method of the rotor disk, the silicon steel sheet is stamped by the punch heads to obtain the rectangular through holes, which is easier than that the silicon steel sheet is stamped to obtain sector-shaped slots. In addition, the stamping is carried out without excessive punch heads of different specifications, thereby simplifying a process and improving efficiency of mass production. The first magnet can be embedded from the outer surface of the rotor iron core in the radial direction, which is easier than being embedded from the inner surface of the rotor iron core.

According to a third aspect of embodiments of this application, a rotor structure is provided, including a rotating shaft, a plurality of first magnets, and the rotor disk in any implementation of the first aspect. The rotor disk is disposed on the rotating shaft. Each first magnet includes a first unit portion and a second unit portion that are connected. The first unit portion is disposed in a first accommodating cavity. The second unit portion is disposed in a second accommodating cavity. The first unit portion includes two first wall surfaces facing first inner surfaces. The second unit portion includes second wall surfaces facing second inner surfaces. A distance between the two first wall surfaces is greater than a distance between the two second wall surfaces.

The rotor disk in any implementation of the first aspect is used in this rotor structure. The rotor disk can be mass produced, so that production efficiency of the rotor structure is improved. In addition, a quantity of punch heads used in the manufacture of the rotor disk is small, thereby reducing costs of the rotor structure. Moreover, the distance between the two first wall surfaces is greater than the distance between the two second wall surfaces, so that a quantity of the first magnets in the rotor iron core is increased, thereby increasing a magnetic field strength of the rotor disk. Further, the first magnet is embedded in the rotor iron core, so that the rotor disk has advantages of high amplitude of air-gap flux density, high sinusoidal degree of air-gap flux density, high saliency ratio, and high magnetic torque. However, the high sinusoidal degree of air-gap flux density may cause a small loss of the first magnet, small cogging torque, and a small torque ripple.

Based on the third aspect, in a possible implementation, a rotor iron core is further provided with a third accommodating cavity, and the third accommodating cavity is provided at a side of the first accommodating cavity in a circumferential direction of the rotor iron core and is in communication with the first accommodating cavity. The first magnet further includes a third unit portion, the third unit portion is connected to the first wall surfaces, and the third unit portion is disposed in the third accommodating cavity.

In this possible implementation, by disposing the third unit portion, a quantity of magnets in the rotor iron core is increased, so that a magnetic field strength of the rotor disk can be increased, and magnetic leakage in the first unit portion can be reduced.

Based on the third aspect, in a possible implementation, an included angle θ exists between the third unit portion and the first unit portion, and a range of the included angle θ is 90° ≤ θ < 180°.

In this possible implementation, the range of the included angle θ between the first unit portion and the third unit portion is set to 90° ≤ θ < 180°, so that more magnetic induction lines can pass through the third unit portion, and magnetic induction lines generated by the third unit portion can improve a flux concentration effect on magnetic induction lines generated by the first unit portion.

Based on the third aspect, in a possible implementation, the rotor structure further includes a plurality of second magnets, and each second magnet includes a fourth unit portion. The rotor iron core is further provided with the plurality of fourth accommodating cavities, the plurality of fourth accommodating cavities are provided at intervals in the circumferential direction of the rotor iron core, and each fourth unit portion is disposed in one of the fourth accommodating cavities. Each fourth accommodating cavity runs through the rotor iron core of an inner surface from an outer surface in a radial direction of the rotor iron core, and is provided at an interval with the first accommodating cavity in an axial direction of the rotor iron core. In the circumferential direction of the rotor iron core, the fourth accommodating cavity includes the two fourth inner surfaces opposite to each other. In the axial direction of the rotor iron core, a connection line of projections of the two fourth inner surfaces on the rotor iron core can form the fourth rectangular surface.

In this possible implementation, by disposing the fourth unit portion, a magnetic field strength can be increased, so that a sinusoidal degree of the generated magnetic field strength is increased, thereby reducing a loss of the rotor disk and reducing noise. In addition, the connection line of the projections of the two fourth inner surfaces on the rotor iron core forms the fourth rectangular surface, so that it can be determined that the two fourth inner surfaces are parallel to each other. Compared with a sector-shaped slot, the fourth accommodating cavity is more easily formed.

Based on the third aspect, in a possible implementation, the rotor iron core is further provided with the fifth accommodating cavity. The fifth accommodating cavity is provided at a side of the fourth accommodating cavity in the circumferential direction of the rotor iron core and is in communication with the fourth accommodating cavity. The second magnet further includes a fifth unit portion, the fifth unit portion is connected to the fourth unit portion, and the fifth unit portion is disposed in the fifth accommodating cavity.

In this possible implementation, the fifth accommodating cavity in communication with the fourth accommodating cavity is provided at a side of the fourth accommodating cavity, so that an overall weight of the rotor iron core can be reduced. Further, by disposing the fifth unit portion in the fifth accommodating cavity, a quantity of magnets in the rotor iron core can be increased, so that a magnetic field strength of the rotor disk can be increased, and magnetic leakage in the fourth unit portion can be reduced.

Based on the third aspect, in a possible implementation, an included angle β exists between the fourth unit portion and the fifth unit portion, and a range of the included angle β is 90° ≤ β < 180°.

In this possible implementation, the range of the included angle β between the fourth unit portion and the fifth unit portion is set to 90° ≤ β < 180°, so that more magnetic induction lines can pass through the fifth unit portion, and magnetic induction lines generated by the fifth unit portion can improve a flux concentration effect on magnetic induction lines generated by the fourth unit portion.

Based on the third aspect, in a possible implementation, the distance between the two first wall surfaces is greater than the distance between the two second inner surfaces, and the distance between the two first wall surfaces is equal to the distance between the two first inner surfaces.

In this possible implementation, the distance between the two first wall surfaces is set to be greater than the distance between the two second inner surfaces. When the first magnet is embedded in the rotor iron core, an internal structure of the rotor iron core can limit the first unit portion, thereby preventing the first unit portion from being disposed in the second accommodating cavity due to over-embedding. The distance between the two first wall surfaces is set to be equal to the distance between the two first inner surfaces. When the first unit portion is embedded in the first accommodating cavity, the first unit portion is prevented from moving relative to the first accommodating cavity, so that the first unit portion can be fixed.

According to a fourth aspect of embodiments of this application, a disk motor is provided, including the rotor structure in the implementations of the third aspect and a stator structure disposed on the rotating shaft.

The rotor structure in the implementations of the third aspect is used in this disk motor. The rotor disk used in the rotor structure is a built-in rotor disk, and a permanent magnet is embedded in the rotor iron core. The disk motor with this rotor structure has a low loss and a high utilization rate of reluctance torque.

According to a fifth aspect of embodiments of this application, an electric vehicle is provided, including a body, a tire, and the disk motor in the implementations of the fourth aspect. The tire is disposed on the body, and the disk motor is connected to the tire.

The disk motor in the implementations of the fourth aspect is used in this electric vehicle. The disk motor has a small loss and a high utilization rate of reluctance torque, so that power of the electric vehicle is improved.

### BRIEF DESCRIPTION OF DRAWINGS

FIG. 1 is a schematic diagram of a structure of a rotor structure according to an embodiment of this application;
FIG. 2 is a schematic diagram of a structure of a rotor disk according to an embodiment of this application;
FIG. 3 is a schematic exploded diagram of the rotor disk shown in FIG. 2;
FIG. 4 is a schematic top view of a structure of the rotor disk shown in FIG. 3;
FIG. 5 shows that the rotor iron core is provided with a third accommodating cavity based on the rotor disk shown in FIG. 2;
FIG. 6 shows that the first magnet includes a third unit portion based on the rotor disk shown in FIG. 3;
FIG. 7 is a schematic diagram of a structure of the third unit portion obliquely disposed in the first magnet based on FIG. 6;
FIG. 8 is a schematic exploded diagram of a rotor disk according to an embodiment of this application, where the rotor disk includes a second magnet;
FIG. 9 shows that the rotor iron core is provided with a fifth accommodating cavity based on the rotor disk shown in FIG. 8;
FIG. 10 is a schematic diagram of a structure of the second magnet including a fifth unit portion based on the rotor disk shown in FIG. 9;
FIG. 11 is a schematic diagram of magnetic circuits in two rotor disks shown in FIG. 10;
FIG. 12 is a schematic diagram of a structure of the fifth unit portion obliquely disposed in the second magnet based on FIG. 10;
FIG. 13 is a diagram of a structure in which a plurality of first magnets are disposed in a rotor disk according to an embodiment of this application;
FIG. 14 is a diagram of a structure in which a plurality of second magnets are disposed in a rotor disk according to an embodiment of this application;
FIG. 15 is a schematic diagram of a structure of a rotor disk according to another embodiment of this application;
FIG. 16 is a schematic exploded diagram of a structure of the rotor disk shown in FIG. 15;
FIG. 17 is a schematic diagram of a structure of the rotor disk including a second magnet based on FIG. 16;
FIG. 18 is a schematic diagram of an accommodating cavity provided in a rotor iron core;
FIG. 19 is a schematic diagram of a structure of a manufacturing method of a rotor disk according to an embodiment of this application;
FIG. 20 is a schematic diagram of a structure of a disk motor according to an embodiment of this application; and
FIG. 21 is a schematic diagram of a structure of an electric vehicle according to an embodiment of this application.

### List of reference numerals of main elements

| | |
|---|---|
| Rotor disk | 100 |
| Rotor iron core | 10 |
| First accommodating cavity | 11 |
| First inner surface | 111 |
| Second accommodating cavity | 12 |
| Second inner surface | 121 |
| Third accommodating cavity | 13 |
| Fourth accommodating cavity | 14 |
| Fourth inner surface | 141 |
| Fifth accommodating cavity | 15 |
| First magnet | 20 |
| First unit portion | 21 |
| First wall surface | 211 |
| First cambered surface | 212 |
| Second unit portion | 22 |
| Second wall surface | 221 |
| Second cambered surface | 222 |
| Third unit portion | 23 |
| Second magnet | 30 |
| Fourth unit portion | 31 |
| Fourth wall surface | 311 |
| Fourth cambered surface | 312 |
| Fifth unit portion | 32 |
| Accommodating cavity | A |
| Rotor structure | 010 |
| Rotating shaft | 400 |
| Disk motor | 001 |
| Stator structure | 020 |
| Electric vehicle | 1 |
| Body | 002 |
| Tire | 003 |

In the following specific implementations, this application is further described with reference to the accompanying drawings.

### DESCRIPTION OF EMBODIMENTS

The following describes implementations of this application by using specific embodiments. A person skilled in the art may easily learn of other advantages and effects of this application based on content disclosed in this specification. On the contrary, a purpose of describing this application with reference to an implementation is to cover another option or modification that may be derived based on claims of this application. To provide an in-depth understanding of this application, the following descriptions include a plurality of specific details. This application may be alternatively implemented without using these details. In addition, to avoid confusion or blurring a focus of this application, some specific details are omitted from the description. It should be noted that embodiments in this application and features in embodiments may be mutually combined in the case of no conflict.

The following terms "first", "second", and the like are merely used for description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two. Orientation terms such as "up", "down", "left", and "right" are defined relative to an orientation of schematic placement of components in the accompanying drawings. It should be understood that these directional terms are relative concepts and are used for relative description and clarification. These directional terms may vary accordingly depending on an orientation in which the components are placed in the accompanying drawings.

In this application, unless otherwise explicitly specified and limited, a term "connection" should be understood in a broad sense. For example, the "connection" may be a fixed connection, a detachable connection, or an integral connection; or may be a direct connection or an indirect connection through an intermediate medium. The term "and/or" used in this specification includes any and all combinations of one or more related listed items.

When the following embodiments are described in detail with reference to schematic diagrams, for ease of description, a diagram indicating a partial structure of a component is partially enlarged not based on a general scale. In addition, the schematic diagrams are merely examples, and should not limit the protection scope of this application herein.

To make the objectives, technical solutions, and advantages of this application clearer, the following further describes the implementations of this application in detail with reference to the accompanying drawings.

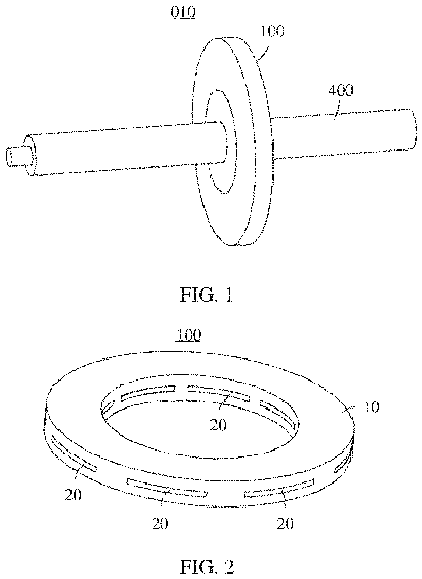

FIG. 1 is a schematic diagram of a structure of a rotor structure 010 according to an embodiment of this application.

Refer to FIG. 1. The rotor structure 010 is provided. The rotor structure 010 includes a rotor disk 100, a rotating shaft 400, and a plurality of first magnets (not shown in the figure). The rotor disk 100 is disposed on the rotating shaft 400, and the first magnets 20 are embedded in the rotor disk 100, so that a fixed magnetic field can be generated in the rotor structure 010.

It may be understood that the rotor structure 010 may be provided with one or more rotor disks 100. For example, when the rotor structure 010 is provided with two rotor disks 100, the two rotor disks 100 are disposed in a direction in which the first magnets are opposite to each other.

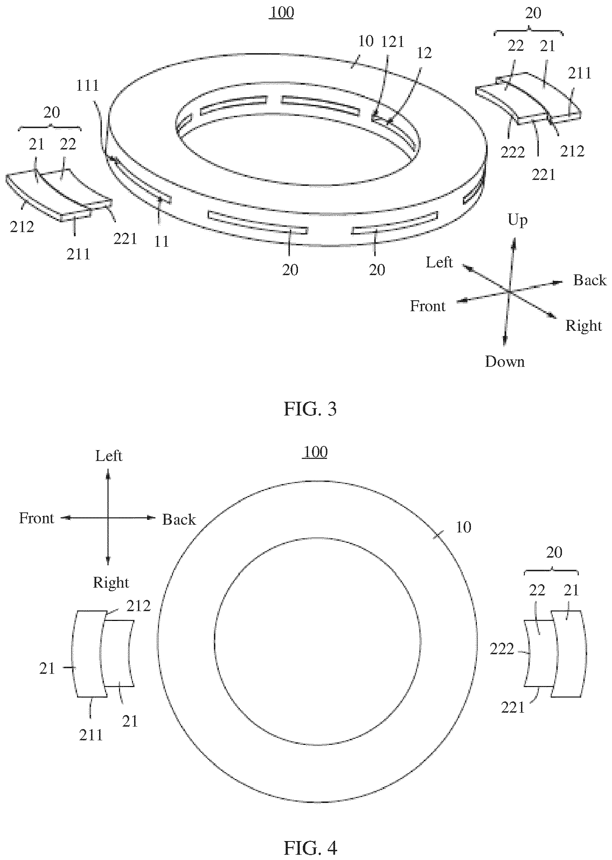

FIG. 2 is a schematic diagram of a structure of the rotor disk 100 according to an embodiment of this application. FIG. 3 is a schematic exploded diagram of the rotor disk 100 shown in FIG. 2. FIG. 4 is a schematic top view of the rotor disk 100 shown in FIG. 3.

Refer to FIG. 2, FIG. 3, and FIG. 4. The rotor disk 100 includes a rotor iron core 10 having a circular cross section. A first magnet 20 is disposed in the rotor iron core 10 to generate a magnetic field. For ease of description, a circumferential direction is a direction of circumference of the rotor iron core 10, a radial direction is a direction from an outer surface of the rotor iron core 10 to a circle center, and an axial direction of the rotor iron core 10 is a direction perpendicular to the radial direction.

The rotor iron core 10 has a circular cross section and is formed by winding a sheet structure. The rotor iron core 10 is provided with a plurality of groups of accommodating cavities (not shown in the figure) at intervals in a circumferential direction of the rotor iron core 10. Each of the plurality of groups of accommodating cavities is configured to accommodate a first magnet 20. Each group of accommodating cavities includes a first accommodating cavity 11 and a second accommodating cavity 12. The first accommodating cavity 11 and the second accommodating cavity 12 are provided in a radial direction of the rotor iron core 10 and are in communication with each other. The plurality of groups of first accommodating cavities 11 and second accommodating cavities 12 that are in communication with each other are described by using a first accommodating cavity 11 and a second accommodating cavity 12 that are in communication with each other as one group. The plurality of groups mean a plurality of the groups. It may be understood that, with reference to different application scenarios of the rotor iron core 10, for example, in some large trucks, in addition to the first accommodating cavity 11 and the second accommodating cavity 12, another accommodating cavity may be provided in each group in the radial direction of the rotor iron core 10 based on a requirement.

The first accommodating cavity 11 includes two first inner surfaces 111 opposite to each other in the circumferential direction of the rotor iron core 10. Aconnection line of projections of the two first inner surfaces 111 on the rotor iron core 10 in an axial direction of the rotor iron core 10 can form a first rectangular surface.

The second accommodating cavity 12 includes two second inner surfaces 121 opposite to each other in the circumferential direction of the rotor iron core 10. A connection line of projections of the two second inner surfaces 121 on the rotor iron core 10 in the axial direction of the rotor iron core 10 can form a second rectangular surface. A distance between the two second inner surfaces 121 in the axial direction of the rotor iron core 10 is less than a distance between the two first inner surfaces 111 in the axial direction of the rotor iron core 10.

Refer to FIG. 3. In an embodiment, in the radial direction of the rotor iron core 10, the first accommodating cavity 11 runs through an outer surface of the rotor iron core 10, and the second accommodating cavity 12 runs through an inner surface of the rotor iron core 10. In addition, the first accommodating cavity 11 is provided at a side that is of the second accommodating cavity 12 and that is away from a circle center of the rotor iron core 10. "Running through" may be understood as passing through two opposite surfaces of the rotor iron core 10. The outer surface of the rotor iron core 10 is a surface away from the circle center of the rotor iron core 10, and the inner surface of the rotor iron core 10 is a surface close to the circle center of the rotor iron core 10. That is, the first accommodating cavity 11 is provided from the outer surface to the inner surface of the rotor iron core 10, and the second accommodating cavity 12 is in communication with the first accommodating cavity 11. The second accommodating cavity 12 extends from a side that is of the first accommodating cavity 11 and that is close to the inner surface of the rotor iron core 10 to the inner surface of the rotor iron core 10, and passes through the inner surface of the rotor iron core 10.

Refer to FIG. 3. A structure of the rotor disk 100 is described with reference to an up-down direction, a left-right direction, and a front-back direction for better description. The two first inner surfaces 111 included in the first accommodating cavity 11 are left and right wall surfaces of the first accommodating cavity 11. In the axial direction of the rotor iron core 10, projections of the two first inner surfaces 111 on the rotor iron core 10 are two lines. The two lines formed by the projection are correspondingly connected to form the first rectangular surface. The two second inner surfaces 121 included in the second accommodating cavity 12 are left and right wall surfaces of the second accommodating cavity 12. In the axial direction of the rotor iron core 10, projections of the two second inner surfaces 121 on the rotor iron core 10 are two lines. The two lines formed by the projection are correspondingly connected to form the second rectangular surface.

In the axial direction of the rotor iron core 10, the distance between the two first inner surfaces 111 is greater than the distance between the two second inner surfaces 121, so that the first accommodating cavity 11 and the second accommodating cavity 12 form a "convex" structure. Therefore, more magnets can be accommodated in the first accommodating cavity 11 and the second accommodating cavity 12.

In the axial direction of the rotor iron core 10, the projections of the two first inner surfaces 111 on the rotor iron core 10 form the first rectangular surface, and the projections of the two second inner surfaces 121 on the rotor iron core 10 form the second rectangular surface. It may be understood that the first accommodating cavity 11 and the second accommodating cavity 12 are not in a sector shape. The first inner surface 111 is not formed in the radial direction of the rotor iron core 10, but extends in a straight-line direction. The second inner surface 121 is also formed in this way.

Refer to FIG. 2, FIG. 3, and FIG. 4. The first magnet 20 includes a first unit portion 21 and a second unit portion 22 that are connected. The first accommodating cavity 11 is configured to accommodate the first unit portion 21, and the second accommodating cavity 12 is configured to accommodate the second unit portion 22. The first unit portion 21 includes two first wall surfaces 211 facing the first inner surfaces 111. The second unit portion 22 includes two second wall surfaces 221 facing the second inner surfaces 121. A distance between the two first wall surfaces 211 is greater than a distance between the two second wall surfaces 221. The first accommodating cavity 11 is configured to accommodate the first unit portion 21, and the second accommodating cavity is configured to accommodate the second unit portion 22.

The two first wall surfaces 211 included in the first unit portion 21 are left and right wall surfaces of the first unit portion 21. In the axial direction of the rotor iron core 10, projections of the two first wall surfaces 211 on the rotor iron core 10 are two lines. The two lines formed by the projection are also correspondingly connected to form a rectangular surface. The two second wall surfaces 221 included in the second unit portion 22 are left and right wall surfaces of the second unit portion 22. In the axial direction of the rotor iron core 10, projections of the two second wall surfaces 221 on the rotor iron core 10 are two lines. The two lines formed by the projection are also correspondingly connected to form a rectangular surface.

The distance between the two first wall surfaces 211 is greater than the distance between the two second wall surfaces 221. The first unit portion 21 and the second unit portion 22 are formed in this way, so that contours of the first unit portion 21 and the second unit portion 22 can match the first accommodating cavity 11 and the second accommodating cavity 12, to increase a volume of the first magnet 20 as much as possible, thereby increasing a magnetic field strength.

Refer to FIG. 4. The first unit portion 21 further includes two first cambered surfaces 212 opposite to each other, and the two first cambered surfaces 212 are wall surfaces of the first unit portion 21 in a front-back direction. The second unit portion 22 further includes two second cambered surfaces 222 opposite to each other, and the two second cambered surfaces 222 are wall surfaces of the second unit portion 22 in the front-back direction. The first cambered surface 212 of the first unit portion 21 facing the second unit portion 22 is connected to the second cambered surface 222 of the second unit portion 22 facing the first unit portion 21.

The front and back wall surfaces of the first unit portion 21 and the second unit portion 22 are formed into cambered surfaces, so that the two wall surfaces are suitable for the rotor iron core 10 formed by winding. For example, in order to better fix the first unit portion 21 and the second unit portion 22, the first accommodating cavity 11 and the second accommodating cavity 12 are provided in a shape that matches the contours of the first unit portion 21 and the second unit portion 22.

The distance between the two first wall surfaces 211 is greater than the distance between the two second inner surfaces 121, and the distance between the two first wall surfaces 211 is equal to the distance between the two first inner surfaces 111. The distance between the two first wall surfaces 211 is set to be greater than the distance between the two second inner surfaces 121. When the first magnet 20 is embedded in the rotor iron core 10, an internal structure of the rotor iron core 10 can stop and limit the first unit portion 21, thereby preventing the first unit portion 21 from being disposed in the second accommodating cavity 12 due to over-embedding. The distance between the two first wall surfaces 211 is set to be equal to the distance between the two first inner surfaces 111. When the first unit portion 21 is embedded in the first accommodating cavity 11, the first unit portion 21 is prevented from moving relative to the first accommodating cavity 11, so that the first unit portion 21 can be fixed. For example, the first unit portion 21 matches the first accommodating cavity 11 and the second unit portion 22 matches the second accommodating cavity 12 by an interference fit, so that the first unit portion 21 and the second unit portion 22 can be better fixed, and a case in which the first unit portion 21 and the second unit portion 22 shake in a high-speed operation

When the first unit portion 21 is disposed in the first accommodating cavity 11, in the circumferential direction of the rotor iron core 10, a part of the first unit portion 21 extending out the second unit portion 22 is attached to an inner wall of the rotor iron core 10. Because the surface of the first unit portion 21 attached to the inner wall of the rotor iron core 10 is a cambered surface, in an aspect, the first unit portion 21 can be better limited, and in another aspect, compared with a flat surface attached to the rotor iron core 10, the first unit portion 21 provides the cambered surface, which can increase a quantity of magnets.

When the rotor iron core 10 is formed by winding a silicon steel sheet, compared with a sector-shaped slot that accommodates a sector-shaped permanent magnet, it is easier to provide the first accommodating cavity 11 and the second accommodating cavity 12 that are projected to be rectangular on the rotor iron core 10. In addition, compared with that the first magnet 20 is divided into three or more segments, the first magnet 20 is divided into two segments including the first unit portion 21 and the second unit portion 22, which can reduce a quantity of unit portions in the first magnet 20 and reduce a specification of a required unit portion.

Further refer to FIG. 4. The rotor disk 100 includes a plurality of first magnets 20 that are evenly disposed in the circumferential direction of the rotor iron core 10. To match the plurality of first magnets 20, the rotor iron core 10 is provided with the first accommodating cavity 11 and the second accommodating cavity 12 that are in a one-to-one correspondence with the first magnet 20. Two adjacent first accommodating cavities 11 do not interfere with each other, and two adjacent second accommodating cavities 12 do not interfere with each other either.

In an embodiment, the rotor disk 100 includes a plurality of first magnets 20 disposed at intervals in the axial direction of the rotor iron core 10. An area of a first magnet 20 at the lowest end of the plurality of first magnets 20 is the largest. Areas of first unit portions 21 and second unit portions 22 gradually decrease in the axial direction of the rotor iron core 10 from bottom to top. In the axial direction of the rotor iron core 10 from bottom to top, areas of a plurality of first magnets 20 are the same, and in this case, a waveform of magnetic field strength finally presented tends to be a flat-top wave. The flat-top wave means that there is no peak in the waveform, and a location that should have been the peak tends to be a straight line. "Tend to be a straight line" may be understood as being close to a straight line, but not being absolutely a straight line. In addition, the areas of the plurality of first magnets 20 gradually decrease, and in this case, a waveform region of magnetic field strength finally presented is a sinusoidal waveform. The magnetic field strength tends to be a sinusoidal waveform, which can increase a sinusoidal degree of air-gap flux density and reduce a torque ripple of the rotor disk 100. In addition, a loss and noise of the first magnet 20 are also reduced.

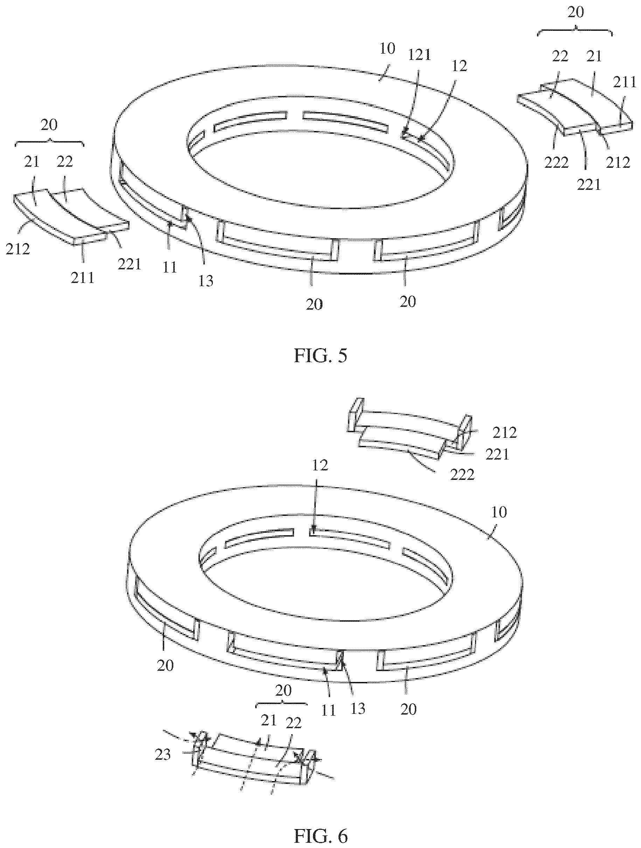

FIG. 5 shows that the rotor iron core 10 is provided with a third accommodating cavity 13 based on the rotor disk 100 shown in FIG. 2.

Refer to FIG. 5. In an embodiment, the rotor iron core 10 is further provided with the third accommodating cavity 13. The third accommodating cavity 13 is provided at a side of the first accommodating cavity 11 in the circumferential direction of the rotor iron core 10 and is in communication with the first accommodating cavity 11. Third accommodating cavities 13 are respectively provided at a left side and a right side of the first accommodating cavity 11 in the circumferential direction of the rotor iron core 10. When the first unit portion 21 is disposed in the first accommodating cavity 11, the two first wall surfaces 211 are exposed in the third accommodating cavities 13. That is, a cross section of the first accommodating cavity 11 and the third accommodating cavities 13 is U-shaped, and the first unit portion 21 is disposed at a bottom of the U-shaped structure. It may be understood that the first accommodating cavity 11 and the third accommodating cavities 13 may be formed integrally. If the first accommodating cavity 11 and the third accommodating cavities 13 are formed integrally, the two first inner surfaces 111 opposite to each other of the first accommodating cavity 11 may be two inner surfaces opposite to each other of the third accommodating cavities 13.

In a case that the third accommodating cavity 13 is provided at a side of the first accommodating cavity 11, when the first unit portion 21 is disposed in the first accommodating cavity 11, magnetic induction lines that do not pass through an air gap can be reduced in the third accommodating cavity 13 for the first unit portion 21, thereby reducing magnetic leakage of the first unit portion 21. In addition, providing the third accommodating cavity 13 can further reduce a weight of the rotor iron core 10, so that a moment of inertia of the rotor structure that uses the rotor disk 100 can be reduced during rotation.

It may be understood that, in an embodiment, an accommodating cavity in communication with the second accommodating cavity 12 may also be provided at a side of the second accommodating cavity 12, so as to reduce magnetic leakage of the second unit portion 22.

FIG. 6 shows that the first magnet 20 includes a third unit portion 23 based on the rotor disk 100 shown in FIG. 3.

Refer to FIG. 6. In an embodiment, the first magnet 20 further includes the third unit portion 23. The third unit portion 23 is connected to the first wall surface 211 of the first unit portion 21, and the third unit portion 23 is disposed in the third accommodating cavity 13. An internal contour of the third accommodating cavity 13 matches an external contour of the third unit portion 23, so as to better fix the third unit portion 23.

In an embodiment, an included angle θ exists between the third unit portion 23 and the first unit portion 21, and a range of the included angle θ is 90° ≤ θ < 180°. The third unit portion 23 is connected to the first unit portion 21, so that magnetic leakage of the first unit portion 21 can be reduced. In addition, an overall magnetic field strength of the rotor disk 100 is also increased.

For example, when the third unit portion 23 is not disposed, magnetic induction lines of the first unit portion 21 close to the first wall surface 211 spread to both sides, as shown by a dashed line in FIG. 6. However, after the third unit portion 23 is disposed, the included angle θ between the third unit portion 23 and the first unit portion 21 is 90°. The third unit portion 23 itself also generates magnetic induction lines, and the magnetic induction lines of the third unit portion 23 and the magnetic induction lines generated by the first unit portion 21 converge, as shown by a fine dash-dotted line in FIG. 6. When the magnetic induction lines of the third unit portion 23 and the first unit portion 21 converge, the magnetic induction lines that should have spread to both sides of the first unit portion 21 also converge, driven by the magnetic induction lines generated by the third unit portion 23, thereby reducing magnetic leakage. In addition, the magnetic induction lines generated by the third unit portion 23 accumulate on the magnetic induction lines generated by the first unit portion 21, thereby increasing a magnetic field strength of the rotor disk 100.

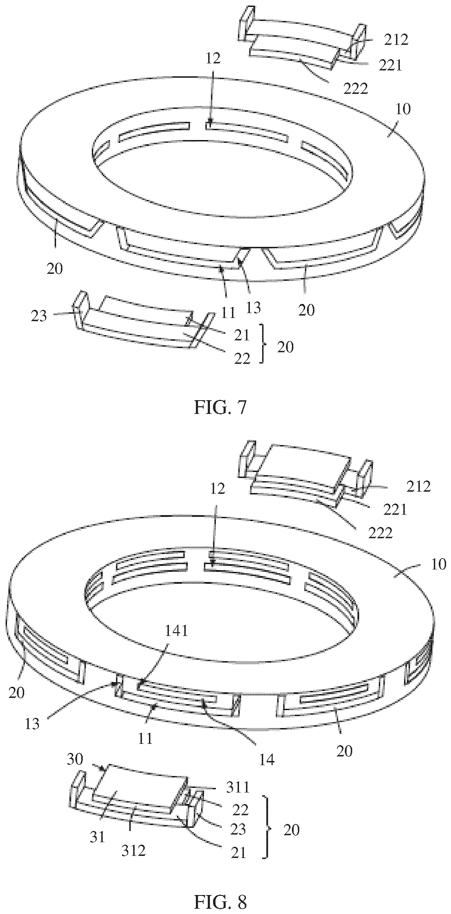

FIG. 7 is a schematic diagram of a structure of the third unit portion 23 obliquely disposed in the first magnet 20 based on FIG. 6.

Refer to FIG. 7. In an embodiment, the third unit portion 23 is obliquely disposed and is connected to the first unit portion 21. The included angle θ between the third unit portion 23 and the first unit portion 21 is 95°. The third unit portion 23 is obliquely disposed on the first unit portion 21, so that a volume of the third unit portion 23 can be increased. In addition, a magnetic circuit between the third unit portion 23 and the first unit portion 21 is better.

For example, the third unit portion 23 is obliquely disposed, so that more magnetic induction lines can converge, and therefore a total quantity of magnetic induction lines converged by the first magnet 20 tends more to be a sinusoidal waveform. The strength of the generated magnetic induction lines continuously tends to be a sinusoidal waveform, which can reduce noise generated by the rotor disk 100 in operation, and can reduce a loss.

It may be understood that third unit portions 23 are disposed on each first unit portion 21, and two adjacent third unit portions 23 do not interfere with each other. In addition, the included angle θ between the first unit portion 21 and the third unit portion 23 may alternatively be 100°, 105°, 110°, 115°, 120°, 125°, 130°, 135°, 140°, 145°, 150°, 155°, 160°, 165°, 170°, 175°, or the like. In addition to the foregoing examples, the included angle θ between the first unit portion 21 and the third unit portion 23 further includes another angle within the range of the included angle θ, such as 92.5° or 108°.

After the third unit portions 23 are disposed on the first unit portion 21, a cross section of the first unit portion 21 and the third unit portions 23 is almost U-shaped in the axial direction of the rotor iron core 10. By using this structure, a quantity of magnetic steels (a volume of the magnetic steels) is increased, and a density of magnetic induction lines is increased, so that the magnetic field strength generated by the first magnet 20 gradually changes from an almost flat-top waveform to a sinusoidal waveform, thereby reducing vibration noise and a loss of the rotor disk 100. In addition, cogging torque and a torque ripple of the rotor disk 100 are reduced.

In an embodiment, the rotor disk 100 includes a plurality of first magnets 20 disposed at intervals in the axial direction of the rotor iron core 10, and the first magnet 20 includes a second unit portion 22 and a third unit portion 23 that are respectively connected to a first unit portion 21. An area of a first magnet 20 at the lowest end of the plurality of first magnets 20 is the largest. Areas of first unit portions 21 and second unit portions 22 gradually decrease in the axial direction of the rotor iron core 10 from bottom to top.

FIG. 8 is a schematic exploded diagram of a rotor disk 100 according to an embodiment. The rotor disk 100 includes a second magnet 30.

Refer to FIG. 8. In an embodiment, the rotor disk 100 further includes the second magnet 30. The second magnet 30 includes a fourth unit portion 31. The rotor iron core 10 is provided with a fourth accommodating cavity 14. The fourth unit portion 31 is disposed in the fourth accommodating cavity 14.

In the circumferential direction of the rotor iron core 10, the fourth accommodating cavity 14 includes two fourth inner surfaces 141 opposite to each other. In the axial direction of the rotor iron core 10, a connection line of projections of the two fourth inner surfaces 141 on the rotor iron core 10 can form a fourth rectangular surface. In addition, the fourth accommodating cavity 14 is provided at an upper end of the first accommodating cavity 11, and is provided at an interval with the first accommodating cavity 11. In the radial direction of the rotor iron core 10, the fourth accommodating cavity 14 runs through the inner surface of the rotor iron core 10 from the outer surface.

The two fourth inner surfaces 141 included in the fourth accommodating cavity 14 are left and right wall surfaces of the fourth accommodating cavity 14. In the axial direction of the rotor iron core 10, projections of the two fourth inner surfaces 141 on the rotor iron core 10 are two lines. The two lines formed by the projection are correspondingly connected to form the fourth rectangular surface. Same as the first accommodating cavity 11 and the second accommodating cavity 12, the projections of the two fourth inner surfaces 141 are connected to form the rectangular surface. It may be understood that the fourth accommodating cavity 14 is not in a sector shape. Compared with a sector-shaped slot that accommodates a sector-shaped permanent magnet, it is easier to provide the fourth accommodating cavity 14 that accommodates the fourth unit portion 31.

The fourth unit portion 31 includes two fourth wall surfaces 311 opposite to each other. The two fourth wall surfaces 311 are left and right wall surfaces of the fourth unit portion 31. In the axial direction of the rotor iron core 10, projections of the two fourth wall surfaces 311 on the rotor iron core 10 are two lines. The two lines formed by the projection are also correspondingly connected to form a rectangular surface.

The fourth unit portion 31 further includes two fourth cambered surfaces 312 opposite to each other, and the two fourth cambered surfaces 312 are wall surfaces of the fourth unit portion 31 in the front-back direction. The front and back wall surfaces of the fourth unit portion 31 are formed into cambered surfaces, so that the two wall surfaces are suitable for the rotor iron core 10 formed by winding. The fourth accommodating cavity 14 is provided in a shape that matches the contour of the fourth unit portion 31, so that the fourth unit portion 31 can be better fixed, and a case in which the fourth unit portion 31 shakes in a high-speed operation of the rotor disk 100 can be relieved.

In an embodiment, observed in the axial direction of the rotor iron core 10, an area of the fourth unit portion 31 is less than a sum of areas of the first unit portion 21 and the second unit portion 22. For example, when the rotor disk 100 is used, the first magnet 20 faces a stator structure. In the axial direction of the rotor iron core 10, the permanent magnet more far away from the stator structure can generate weaker magnetic field strength. In an aspect, a volume of the fourth unit portion 31 is reduced, so that magnetic induction lines generated by the fourth unit portion 31 can converge together with the magnetic induction lines generated by the first magnet 20 as much as possible, and in another aspect, costs of the second magnet 30 can be further reduced.

The rotor disk 100 includes a plurality of second magnets 30 that are evenly disposed in the circumferential direction of the rotor iron core 10. A second magnet 30 is disposed on each first magnet 20. The first magnet 20 and the second magnet 30 that are disposed at two layers can increase the magnetic field strength, thereby achieving a flux concentration effect. The denser the generated magnetic induction lines are, the more the formed magnetic field strength tends to be a sinusoidal waveform.

It may be understood that the fourth unit portion 31 may be suitable for a case in which the first unit portion 21 is not connected to the third unit portion 23. In addition, the fourth unit portion 31 may alternatively be suitable for a case in which the first unit portion 21 is connected to the third unit portion 23.

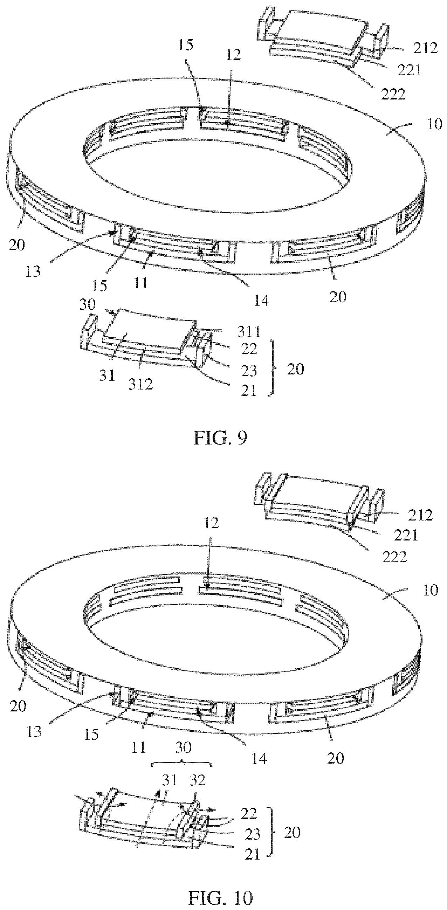

FIG. 9 shows that the rotor iron core 10 is provided with a fifth accommodating cavity 15 based on the rotor disk 100 shown in FIG. 8.

Refer to FIG. 9. In an embodiment, the rotor iron core 10 is further provided with the fifth accommodating cavity 15. The fifth accommodating cavity 15 is provided at a side of the fourth accommodating cavity 14 in the circumferential direction of the rotor iron core 10 and is in communication with the fourth accommodating cavity 14. Fifth accommodating cavities 15 are respectively provided at a left side and a right side of the fourth accommodating cavity 14 in the circumferential direction of the rotor iron core 10. When the fourth unit portion 31 is disposed in the fifth accommodating cavities 15, the two fourth wall surfaces 311 are exposed in the fifth accommodating cavities 15.

In a case that the fifth accommodating cavity 15 is provided at a side of the fourth accommodating cavity 14, when the fourth unit portion 31 is disposed in the fourth accommodating cavity 14, magnetic induction lines that do not pass through an air gap can be reduced in the fifth accommodating cavity 15 for the fourth unit portion 31, thereby reducing magnetic leakage of the first unit portion 21. In addition, providing the fifth accommodating cavity 15 can further reduce a weight of the rotor iron core 10, so that a moment of inertia of the rotor structure that uses the rotor disk 100 can be reduced during rotation.

FIG. 10 is a schematic diagram of a structure of the second magnet 30 including a fifth unit portion 32 based on the rotor disk 100 shown in FIG. 9.

Refer to FIG. 10. In an embodiment, the second magnet 30 further includes the fifth unit portion 32. The fifth unit portion 32 is connected to the fourth wall surface of the fourth unit portion 31, and the fifth unit portion 32 is disposed in the fifth accommodating cavity 15. An internal contour of the fifth accommodating cavity 15 matches an external contour of the fifth unit portion 32, so as to better fix the fifth unit portion 32.

In an embodiment, an included angle β exists between the fifth unit portion 32 and the fourth unit portion 31, and a range of the included angle β is 90° ≤ β < 180°. The fifth unit portion 32 is connected to the fourth unit portion 31, so that magnetic leakage of the fourth unit portion 31 can be reduced. In addition, an overall magnetic field strength of the rotor disk 100 is also increased.

Same as the first unit portion 21 and the third unit portion 23, for example, when the fifth unit portion 32 is not disposed, magnetic induction lines of the fourth unit portion 31 close to the fourth wall surface 311 spread to both sides, as shown by a dashed line in FIG. 10. However, after the fifth unit portion 32 is disposed, the included angle β between the fifth unit portion 32 and the fourth unit portion 31 is 90°. The fifth unit portion 32 itself also generates magnetic induction lines, and the magnetic induction lines of the fifth unit portion 32 and the magnetic induction lines generated by the fourth unit portion 31 converge, as shown by a fine dash-dotted line in FIG. 10. When the magnetic induction lines of the fifth unit portion 32 and the fourth unit portion 31 converge, the magnetic induction lines that should have spread to both sides of the fourth unit portion 31 also converge, driven by the magnetic induction lines generated by the fifth unit portion 32, thereby reducing magnetic leakage. In addition, the magnetic induction lines generated by the fifth unit portion 32 accumulate on the magnetic induction lines generated by the fourth unit portion 31, thereby increasing a magnetic field strength of the rotor disk 100.

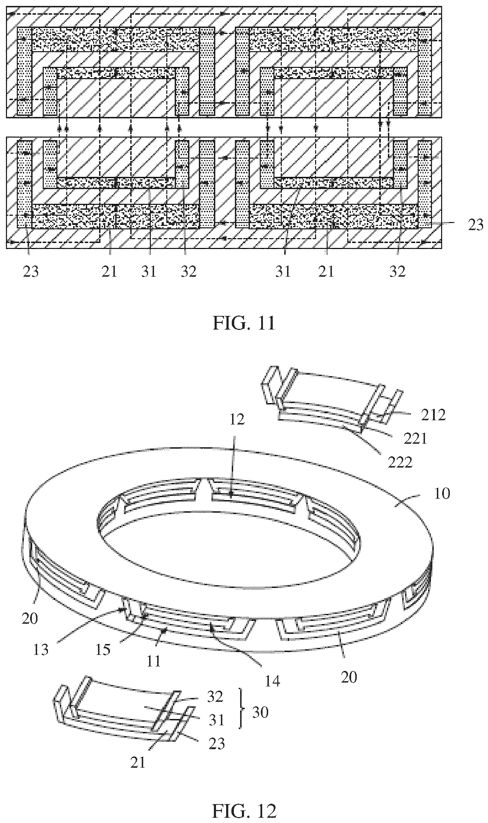

FIG. 11 is a schematic diagram of magnetic circuits in two rotor disks 100 shown in FIG. 10.

Refer to FIG. 11. When the two rotor disks 100 are magnetized, between the two rotor disks 100, magnetic induction lines of the first magnet 20 in one rotor disk 100 point to the other rotor disk 100. However, outside the two rotor disks 100, magnetic induction lines of the first magnets 20 in the two rotor disks 100 point to opposite directions. Therefore, magnetic induction lines between the two rotor disks 100 form a closed loop.

FIG. 12 is a schematic diagram of a structure of the fifth unit portion 32 obliquely disposed in the second magnet 30 based on FIG. 10.

Refer to FIG. 12. In an embodiment, the fifth unit portion 32 is obliquely disposed and is connected to the fourth unit portion 31. The included angle β between the fifth unit portion 32 and the fourth unit portion 31 is 95°. The fifth unit portion 32 is obliquely disposed on the fourth unit portion 31, so that a volume of the fifth unit portion 32 can be increased. In addition, a magnetic circuit between the fifth unit portion 32 and the fourth unit portion 31 is better.

For example, the fourth unit portion 31 is obliquely disposed, so that more magnetic induction lines can converge, and therefore a total quantity of magnetic induction lines converged by the second magnet 30 tends more to be a sinusoidal waveform. The strength of the generated magnetic induction lines continuously tends to be a sinusoidal waveform, which can reduce noise generated by the rotor disk 100 in operation, and can reduce a loss.

It may be understood that the included angle β between the fourth unit portion 31 and the fifth unit portion 32 may alternatively be 100°, 105°, 110°, 115°, 120°, 125°, 130°, 135°, 140°, 145°, 150°, 155°, 160°, 165°, 170°, 175°, or the like. In addition to the foregoing examples, the included angle β between the fourth unit portion 31 and the fifth unit portion 32 further includes another angle within the range of the included angle β such as 95.5° or 124°.

It may be understood that the second magnet 30 includes the fourth unit portion 31 and the fifth unit portion 32 that are connected. The second magnet 30 may be suitable for a case in which the first unit portion 21 is not connected to the third unit portion 23, or may be suitable for a case in which the first unit portion 21 is connected to the third unit portion 23.

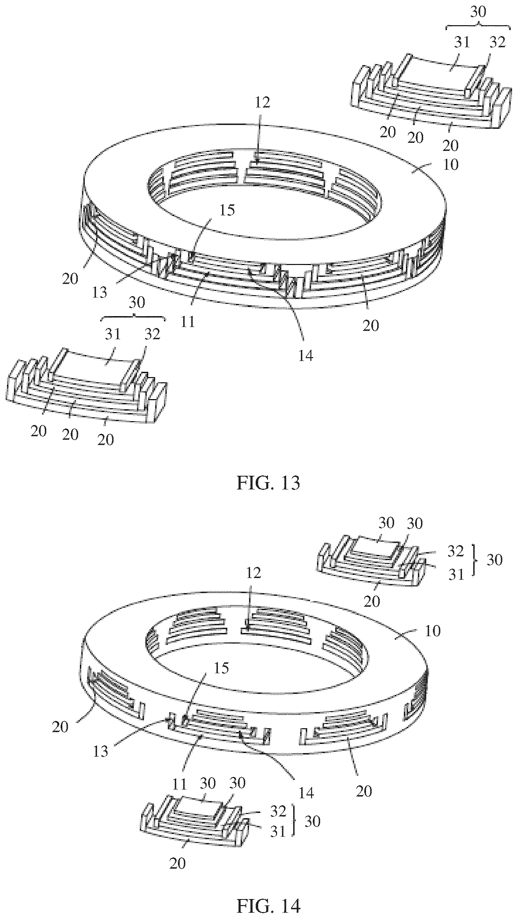

FIG. 13 is a diagram of a structure in which a plurality of first magnets 20 are disposed in a rotor disk 100 according to an embodiment.

Refer to FIG. 13. In an embodiment, the rotor disk 100 includes the plurality of first magnets 20 disposed at intervals in the axial direction of the rotor iron core 10. A second magnet 30 is disposed at a side of the plurality of first magnets 20. With reference to the directions in FIG. 3, for example, the plurality of first magnets 20 are disposed at intervals in the axial direction of the rotor iron core 10 from bottom to top, and the second magnet 30 is disposed at an upper end of the plurality of first magnets 20. From the first magnet 20 at the lowest layer to the first magnet 20 at the highest layer, a sum of areas of the first unit portion 21 and the second unit portion 22 gradually decreases. An area of the fourth unit portion 31 is less than a sum of areas of the first unit portion 21 and the second unit portion 22 at the highest layer.

FIG. 14 is a diagram of a structure in which a plurality of second magnets 30 disposed in a rotor disk 100 according to an embodiment.

Refer to FIG. 14. In an embodiment, the rotor disk 100 includes the plurality of second magnets 30 disposed at intervals in the axial direction of the rotor iron core 10. A first magnet 20 is disposed at a side of the plurality of second magnets 30. With reference to the directions in FIG. 3, for example, the plurality of second magnets 30 are disposed at intervals in the axial direction of the rotor iron core 10 from bottom to top, and the first magnet 20 is disposed at a lower end of the plurality of second magnets 30. From the second magnet 30 at the lowest layer to the second magnet 30 at the highest layer, an area of the fourth unit portion 31 gradually decreases. A sum of areas of the first unit portion 21 and the second unit portion 22 is greater than an area of the fourth unit portion 31 at the lowest layer.

A plurality of first magnets 20 or a plurality of second magnets 30 are disposed in the axial direction of the rotor iron core 10, so that a structural strength of the rotor disk 100 is increased, and a magnetic field strength is also increased due to the increase of a quantity of magnets. The magnetic field strength is increased and tends to be a sinusoidal waveform, which can reduce a loss of the rotor disk 100 and reduce noise. In addition, the structural strength and a saliency ratio of the rotor disk 100 are increased.

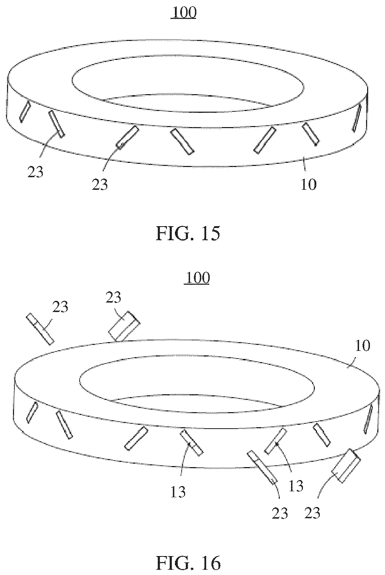

FIG. 15 is a schematic diagram of a structure of a rotor disk 100 according to another embodiment. FIG. 16 is a schematic exploded diagram of a structure of the rotor disk 100 shown in FIG. 15.

Refer to FIG. 7, FIG. 15, and FIG. 16. The rotor disk 100 in this embodiment may be obtained by removing the first unit portion 21 and the second unit portion 22 shown in FIG. 7 and retaining only the third unit portion 23. Specifically, only the third accommodating cavity 13 may be provided in the rotor iron core 10 shown in FIG. 16, only the third unit portion 23 may be disposed in the first magnet 20, and the third unit portion 23 is disposed in the third accommodating cavity 13.

Two third unit portions 23 are disposed in a V shape, so that some magnetic induction lines of the two third unit portions 23 can still converge, thereby achieving a flux concentration effect.

To increase a magnetic field strength of the two third unit portions 23 disposed in the V shape, for example, when the rotor disk 100 is used in a large electric vehicle, a volume of the rotor disk 100 is large. In this case, thicknesses of the two third unit portions 23 may be increased to improve the magnetic field strength of the two third unit portions 23.

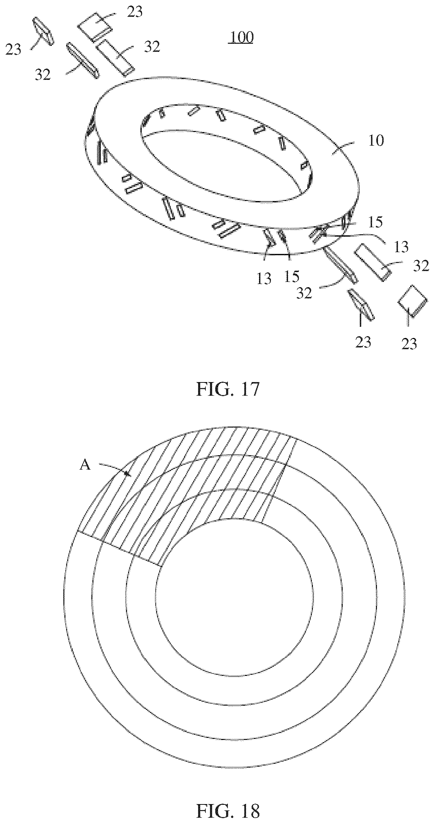

FIG. 17 is a schematic diagram of a structure of the rotor disk 100 including a second magnet 30 based on FIG. 16.

Refer to FIG. 12 and FIG. 17. In an embodiment, the rotor disk 100 further includes the second magnet 30. The second magnet 30 may be obtained by removing the fourth unit portion 31 shown in FIG. 12. Specifically, only the third accommodating cavity 13 and the fifth accommodating cavity 15 may be provided in the rotor iron core 10 shown in FIG. 17, only the third unit portion 23 is disposed in the first magnet 20, and only the fifth unit portion 32 is disposed in the second magnet 30. The third unit portion 23 is disposed in the third accommodating cavity 13, the fifth unit portion 32 is disposed in the fifth accommodating cavity 15, and two fifth unit portions 32 are disposed in a V shape.

By further disposing the second magnet 30 on the rotor disk 100, a magnetic field strength is increased, so that a sinusoidal degree of the magnetic field strength is increased, thereby reducing a loss of the rotor disk 100 and reducing noise.

It may be understood that, in an embodiment, a plurality of layers of first magnets 20 and second magnets 30 that are in a V shape may be further disposed.

The rotor iron core 10 may be formed by pressing an SMC (soft magnetic composite, soft magnetic composite), or may be formed by winding a silicon steel sheet. The rotor iron core 10 formed by winding the silicon steel sheet has better structural strength than the rotor iron core 10 formed by pressing the SMC. When the rotor iron core 10 formed by winding a silicon steel sheet is used, a permanent magnet needs to be embedded in the rotor iron core 10 for use. In order to accommodate the permanent magnet, an accommodating cavity needs to be provided on the rotor iron core 10. Generally, the silicon steel sheet is stamped by a punching and winding device with a punch head to form through holes on the silicon steel sheet, and the through holes are stacked to form the accommodating cavity.

FIG. 18 is a schematic diagram of an accommodating cavity provided in a rotor iron core.

Refer to FIG. 18. For example, when a silicon steel sheet is stamped by a punch head of only one specification, to improve utilization of the rotor iron core 10 and increase a quantity of magnetic steels, the accommodating cavity A is provided in an annular sector shape. However, to form an annular sector-shaped slot in the rotor iron core 10 formed by winding the silicon steel sheet, different sizes of through holes need to be provided at all layers of the wound silicon steel sheet, so that the through holes can be stacked to form the annular sector-shaped slot. The rotor iron core 10 with the accommodating cavity in the annular sector shape needs to be formed by stamping the silicon steel sheet by a plurality of punch heads of different specifications, which is not likely to implement mass production.

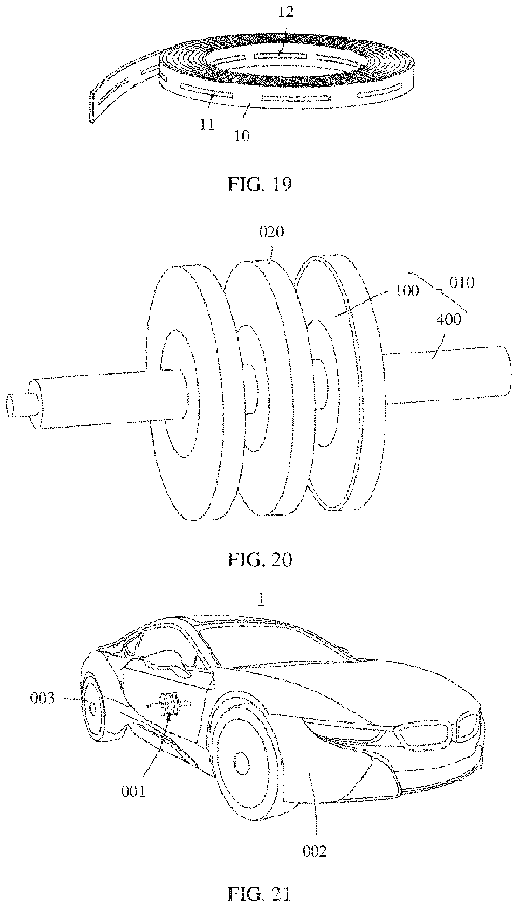

FIG. 19 is a schematic diagram of a structure of a manufacturing method of a rotor disk 100 according to an embodiment.

Refer to FIG. 19. The manufacturing method of the rotor disk 100 is further provided, to manufacture the foregoing rotor disk 100.

The manufacturing method of the rotor disk 100 includes the following steps:

S101: Stamp a silicon steel sheet by a punching and winding device with a first punch head, to form a plurality of first rectangular through holes on the silicon steel sheet.

S102: Stamp the silicon steel sheet by the punching and winding device with a second punch head, to form a plurality of second rectangular through holes on the silicon steel sheet.

S103: Wind the silicon steel sheet to form a rotor iron core 10, where a plurality of first rectangular through holes form a first accommodating cavity 11, and a plurality of second rectangular through holes form a second accommodating cavity 12.

S104: Embed a first magnet 20 in the first accommodating cavity 11 and the second accommodating cavity 12 from an outside of the rotor iron core 10 in a radial direction.

By using the manufacturing method of the rotor disk 100, the silicon steel sheet is stamped by the punch heads to obtain the rectangular through holes, which is easier than that the silicon steel sheet is stamped to obtain sector-shaped slots. In addition, the stamping is carried out without excessive punch heads of different specifications, thereby simplifying a process and improving efficiency of mass production. The first magnet 20 is embedded from the outer surface of the rotor iron core 10 in the radial direction, which is easier than being embedded from the inner surface of the rotor iron core 10. When the first magnet 20 is embedded in the rotor iron core 10, a surface of the first magnet 20 or the rotor iron core 10 may be coated with an adhesive, to improve stability of the first permanent magnet. It may be understood that after the first magnet 20 is embedded in the rotor iron core 10, an adhesive tape may be wound on a surface of the rotor iron core 10, to prevent the first magnet 20 from being detached from the rotor iron core 10 due to a centrifugal force when the rotor disk 100 rotates.

To manufacture the rotor disk 100 shown in FIG. 3, after the step S103, the method further includes the following step:

S1031: Sequentially provide the first accommodating cavity 11 and the second accommodating cavity 12 in a radial direction of the rotor iron core 10, and make the first accommodating cavity 11 and the second accommodating cavity 12 be in communication with each other.

In the step S1031, the rectangular through holes of two different sizes are stacked to form the first accommodating cavity 11 and the second accommodating cavity 12, and the first accommodating cavity 11 and the second accommodating cavity 12 are in a "convex" shape. Compared with the sector-shaped accommodating cavity A in FIG. 18, it is easier to manufacture the rotor disk 100 by using this manufacturing method, without stamping by a plurality of punch heads, which can resolve a difficulty of mass production.

In the step S101 and the step S102, the first punch head and the second punch head have different specifications, to form the rectangular through holes of different sizes. In addition, for different shapes of the first magnet 20, the first punch head and the second punch head may have a same contour as the first magnet 20. For example, when the first magnet 20 includes a first unit portion 21 and a second unit portion 22, punch heads with a same contour as the first unit portion 21 and the second unit portion 22 may be used. When the first magnet 20 further includes a third unit portion 23, a punch head portion with a same contour as the third unit portion 23 may be further disposed on the punch head with a same contour as the first unit portion 21, so that the first accommodating cavity 11 and a third accommodating cavity 13 can be obtained integrally through stamping by the punch head.

To manufacture the rotor disk 100 shown in FIG. 8, the manufacturing method of the rotor disk further includes the following steps. A third rectangular through hole is formed together with the first rectangular through hole. A third rectangular through hole is formed together with the second rectangular through hole. When the silicon steel sheet is wound to form the rotor iron core, the third rectangular through hole formed together with the first rectangular through hole and the third rectangular through hole formed together with the second rectangular through hole are in communication to form the fourth accommodating cavity 14. A second magnet 30 is embedded in the fourth accommodating cavity 14 from an outside of the rotor iron core 10 in the radial direction.

When the silicon steel sheet is stamped by the first punch head and the second punch head, the third rectangular through hole is formed together with the first rectangular through hole through stamping by the first punch head, and the third rectangular through hole is formed together with the second rectangular through hole through stamping by the second punch head. After the silicon steel sheet is wound, the third rectangular through holes formed through stamping respectively by the first punch head and the second punch head jointly form the fourth accommodating cavity 14. Then, the second magnet 30 is embedded in the fourth accommodating cavity 14 from the outer surface of the rotor iron core 10.

For example, the manufacturing method is described with reference to the structure of the rotor disk 100 shown in FIG. 8.

The silicon steel sheet is stamped by the punching and winding device with the first punch head, to form the plurality of first rectangular through holes on the silicon steel sheet. In addition, a plurality of third rectangular through holes may be further formed on the silicon steel sheet by the first punch head.

After the silicon steel sheet is stamped for about half a length by the first punch head of the punching and winding device, the first punch head is replaced with the second punch head on the punching and winding device.

The silicon steel sheet continues to be stamped by the punching and winding device with the second punch head, to form the plurality of second rectangular through holes on the silicon steel sheet. In addition, a plurality of third rectangular through holes may be further formed on the silicon steel sheet by the secondpunch head.

The silicon steel sheet is wound to form the rotor iron core 10. The plurality of first rectangular through holes are in a one-to-one correspondence to form the first accommodating cavity 11. The plurality of second rectangular through holes are in a one-to-one correspondence to form the second accommodating cavity 12. The first accommodating cavity 11 and the second accommodating cavity 12 are sequentially provided in the radial direction of the rotor iron core 10 and are in communication with each other. In addition, the plurality of third rectangular through holes formed together with the first rectangular through holes and the plurality of third rectangular through holes formed together with the second rectangular through holes are in a one-to-one correspondence to form the fourth accommodating cavity 14.

The first magnet 20 is embedded in the first accommodating cavity 11 and the second accommodating cavity 12 in the radial direction of the rotor iron core 10 from the outer surface of the rotor iron core 10.

The second magnet 30 is embedded in the fourth accommodating cavity 14 in the radial direction of the rotor iron core 10 from the outer surface of the rotor iron core 10.

In another embodiment, to improve manufacturing efficiency of the rotor disk 100, the silicon steel sheet may be stamped and wound at the same time.

For example, the manufacturing method is described with reference to the structure of the rotor disk 100 shown in FIG. 8.

The silicon steel sheet is stamped by the punching and winding device with the second punch head, to form the plurality of second rectangular through holes on the silicon steel sheet. A plurality of third rectangular through holes may be further formed on the silicon steel sheet by the second punch head. In addition, the silicon steel sheet may also be wound by the punching and winding device . The plurality of second rectangular through holes are in a one-to-one correspondence to form the second accommodating cavity 12. The plurality of third rectangular through holes formed together with the second rectangular through holes are in a one-to-one correspondence to form a part of the fourth accommodating cavity.

After the silicon steel sheet is stamped for about half a length by the second punch head of the punching and winding device, the second punch head is replaced with the first punch head on the punching and winding device.

The silicon steel sheet continues to be stamped by the punching and winding device with the first punch head, to form the plurality of first rectangular through holes on the silicon steel sheet. A plurality of third rectangular through holes may be further formed on the silicon steel sheet by the first punch head. In addition, the silicon steel sheet may also be wound by the punching and winding device . The plurality of first rectangular through holes are in a one-to-one correspondence to form the first accommodating cavity 11. The plurality of third rectangular through holes formed together with the first rectangular through holes correspond to the foregoing part of the fourth accommodating cavity. After the winding is completed, the plurality of third rectangular through holes form the complete fourth accommodating cavity 14.

It may be understood that, in another embodiment, the second unit portion 22 or the fourth unit portion 31 may be embedded from the inner surface of the rotor iron core. The rotor iron core may alternatively be manufactured by using an SMC. During manufacturing, the SMC is stamped by a punch head to obtain an accommodating cavity that accommodates the first magnet 20.

FIG. 20 is a schematic diagram of a structure of a disk motor 001 according to an embodiment of this application.

Refer to FIG. 20. The disk motor 001 includes the foregoing rotor structure 010 and a stator structure 020 disposed on a rotating shaft 400. The rotor structure 010 and the stator structure 020 may be disposed in a manner of one rotor and one stator, or may be disposed in a manner of two rotors and one stator, that is, two rotor disks 100 are disposed in the rotor structure 010 and the stator structure 020 is disposed between the two rotor disks 100, or may be disposed in a manner of a plurality of rotors and a plurality of stators. Optionally, the disk motor 001 is a disk motor.

FIG. 21 is a schematic diagram of a structure of an electric vehicle according to an embodiment of this application.

Refer to FIG. 21. The electric vehicle 1 includes a body 002, a tire 003, and the foregoing disk motor 001. The body 002 is a vehicle body. The tire 003 is disposed on the body 002. The disk motor 001 is connected to the tire 003 to drive the tire 003 to rotate, so that the electric vehicle 1 can move. The disk motor 001 may be directly connected to the tire 003, or may be connected to the tire 003 by a gear. The disk motor 001 has a small loss and a high utilization rate of reluctance torque, so that power of the electric vehicle 1 is improved.

The rotor disk 100 manufactured by using the foregoing manufacturing method of the rotor disk 100 has high structural strength. When a magnetic field is generated by the segmented first unit portion 21 and second unit portion 22, there is no need to dispose a large quantity of first magnets 20. Compared with that the first magnet 20 is divided into three segments, the first magnet 20 is divided into two segments in the radial direction of the rotor iron core 10, which can further reduce a specification of the permanent magnet. In addition, it is easier to embed the first magnet 20 of two segments from the outer surface of the rotor iron core 10 than to embed the first magnet 20 of three segments or to embed the first magnet 20 from the inner surface. Moreover, this built-in rotor disk 100 has a lower loss, a higher utilization rate of reluctance torque, a higher amplitude of air-gap flux density, and a higher sinusoidal degree of air-gap flux density than a surface-mounted rotor disk. Further, the rotor disk 100 manufactured by using the foregoing manufacturing method of the rotor disk 100 can be mass produced, to keep up with production.

The foregoing descriptions are merely specific implementations of this application, but are not intended to limit the protection scope of this application. Any variation or replacement within the technical scope disclosed in this application shall fall within the protection scope of this application.

## Claims

1. A rotor disk, comprising:
a rotor iron core, having a circular cross section and formed by winding a sheet structure, wherein the rotor iron core is provided with a plurality of groups of accommodating cavities at intervals in a circumferential direction of the rotor iron core, each of the plurality of groups of accommodating cavities is configured to accommodate a first magnet, each group of accommodating cavities comprises a first accommodating cavity and a second accommodating cavity, and the first accommodating cavity and the second accommodating cavity are provided in a radial direction of the rotor iron core and are in communication with each other, wherein
the first accommodating cavity is configured to accommodate a first unit portion of the first magnet, the first accommodating cavity comprises two first inner surfaces opposite to each other in the circumferential direction of the rotor iron core, and a connection line of projections of the two first inner surfaces on the rotor iron core in an axial direction of the rotor iron core can form a first rectangular surface; and
the second accommodating cavity is configured to accommodate a second unit portion of the first magnet, the second accommodating cavity comprises two second inner surfaces opposite to each other in the circumferential direction of the rotor iron core, a connection line of projections of the two second inner surfaces on the rotor iron core in the axial direction of the rotor iron core can form a second rectangular surface, and a distance between the two second inner surfaces in the axial direction of the rotor iron core is less than a distance between the two first inner surfaces in the axial direction of the rotor iron core.

2. The rotor disk according to claim 1, wherein in the radial direction of the rotor iron core, the first accommodating cavity runs through an outer surface of the rotor iron core, the second accommodating cavity runs through an inner surface of the rotor iron core, and the first accommodating cavity is provided at a side that is of the second accommodating cavity and that is away from a circle center.

3. The rotor disk according to claim 2, wherein the rotor iron core is further provided with a third accommodating cavity; and
the third accommodating cavity is provided at a side of the first accommodating cavity in the circumferential direction of the rotor iron core and is in communication with the first accommodating cavity, and the first unit portion can expose from the third accommodating cavity.

4. The rotor disk according to any one of claims 1 to 3, wherein the rotor iron core is further provided with a plurality of fourth accommodating cavities, and the plurality of fourth accommodating cavities are provided at intervals in the circumferential direction of the rotor iron core;
each fourth accommodating cavity runs through the inner surface of the rotor iron core from the outer surface in the radial direction of the rotor iron core, and is provided at an interval with the first accommodating cavity in the axial direction of the rotor iron core;
in the circumferential direction of the rotor iron core, the fourth accommodating cavity comprises two fourth inner surfaces opposite to each other; and
in the axial direction of the rotor iron core, a connection line of projections of the two fourth inner surfaces on the rotor iron core can form a fourth rectangular surface.

5. The rotor disk according to claim 4, wherein the rotor iron core is further provided with a fifth accommodating cavity; and
the fifth accommodating cavity is provided at a side of the fourth accommodating cavity in the circumferential direction of the rotor iron core and is in communication with the fourth accommodating cavity.

6. A manufacturing method of a rotor disk, comprising the following steps:
stamping a silicon steel sheet by a punching and winding device with a first punch head, to form a plurality of first rectangular through-holes on the silicon steel sheet;
stamping the silicon steel sheet by the punching and winding device with a second punch head, to form a plurality of second rectangular through holes on the silicon steel sheet;
winding the silicon steel sheet to form a rotor iron core, wherein a plurality of first rectangular through holes form a first accommodating cavity, and a plurality of second rectangular through holes form a second accommodating cavity; and
embedding a first magnet in the first accommodating cavity and the second accommodating cavity from an outside of the rotor iron core in a radial direction.

7. A rotor structure, comprising a rotating shaft, a plurality of first magnets, and the rotor disk according to any one of claims 1 to 5, wherein the rotor disk is disposed on the rotating shaft;
each first magnet comprises a first unit portion and a second unit portion that are connected, the first unit portion is disposed in a first accommodating cavity, and the second unit portion is disposed in a second accommodating cavity; and
the first unit portion comprises two first wall surfaces facing first inner surfaces, the second unit portion comprises second wall surfaces facing second inner surfaces, and a distance between the two first wall surfaces is greater than a distance between the two second wall surfaces.

8. The rotor structure according to claim 7, wherein a rotor iron core is further provided with a third accommodating cavity, and the third accommodating cavity is provided at a side of the first accommodating cavity in a circumferential direction of the rotor iron core and is in communication with the first accommodating cavity; and
the first magnet further comprises a third unit portion, the third unit portion is connected to the first wall surfaces, and the third unit portion is disposed in the third accommodating cavity.

9. The rotor structure according to claim 8, wherein an included angle θ exists between the third unit portion and the first unit portion, and a range of the included angle θ is 90° ≤ θ < 180°.

10. The rotor structure according to claim 7, wherein the rotor structure further comprises a plurality of second magnets, and each second magnet comprises a fourth unit portion;
the rotor iron core is further provided with a plurality of fourth accommodating cavities, the plurality of fourth accommodating cavities are provided at intervals in the circumferential direction of the rotor iron core, and each fourth unit portion is disposed in one of the fourth accommodating cavities;
each fourth accommodating cavity runs through the rotor iron core of an inner surface from an outer surface in a radial direction of the rotor iron core, and is provided at an interval with the first accommodating cavity in an axial direction of the rotor iron core;
in the circumferential direction of the rotor iron core, the fourth accommodating cavity comprises two fourth inner surfaces opposite to each other; and
in the axial direction of the rotor iron core, a connection line of projections of the two fourth inner surfaces on the rotor iron core can form a fourth rectangular surface.

11. The rotor structure according to claim 10, wherein the rotor iron core is further provided with a fifth accommodating cavity;
the fifth accommodating cavity is provided at a side of the fourth accommodating cavity in the circumferential direction of the rotor iron core and is in communication with the fourth accommodating cavity; and
the second magnet further comprises a fifth unit portion, the fifth unit portion is connected to the fourth unit portion, and the fifth unit portion is disposed in the fifth accommodating cavity.

12. The rotor structure according to claim 11, wherein an included angle β exists between the fourth unit portion and the fifth unit portion, and a range of the included angle β is 90° ≤ β < 180°.

13. The rotor structure according to claim 7, wherein a distance between the two first wall surfaces is greater than a distance between the two second inner surfaces, and the distance between the two first wall surfaces is equal to a distance between the two first inner surfaces.

14. A disk motor, comprising the rotor structure according to any one of claims 7 to 13 and a stator structure disposed on the rotating shaft.

15. An electric vehicle, comprising a body, a tire, and the disk motor according to claim 14, wherein the tire is disposed on the body, and the disk motor is connected to the tire.
